# EUROPEAN PATENT APPLICATION

(11) **EP 2 501 052 A1**
(43) Date of publication of application: **19.09.2012**
(21) Application number: 11158480.1
(22) Date of filing: 16.03.2011
(51) Int. Cl.: H04B 3/56

(54) **Power line communications systems**

(71) Applicant: Eandis, 9090 Melle (BE)
(72) Inventor: Henderieckx, Luc, 2550 Kontich (BE)
(74) Representative: Sarlet, Steven Renaat Irène

(57) **Abstract**

Described herein is an improved power line communications system (100) in which noise generated by appliances and/or equipment in an end user mains network (150) is better suppressed. A smart metering device (170) in the power line communications system (100), and associated with an end user network (150), includes a notch filter (190) that attenuates noise in the end user network so that it does not interfere with signals being transmitted to and from the smart metering device (150) over the power line communications system (100). A similar notch filter (195) connected across a secondary side (136) of transformer (132) in a power distribution sub-station (130) can be used to attenuate noise from a primary side (134) of the transformer (132).

## Description

The present invention relates to power line communications systems and is more particularly, although not exclusively, concerned with smart metering devices for use with such systems.

The current trend for utility companies is to move towards more intelligent metering systems and to replace electromechanical meters that need to be read in situ with so-called "smart meters" that can be read remotely. Power line communications systems are required for use with such smart meters and they offer the advantage that the low voltage network operators, such as utility companies, have full control over the meters. In addition, such smart meters can be easily installed for "plug and play" operation as the meter can be automatically connected to a communication platform via the low voltage network.

However, power line communications systems can be unreliable and the communication can be interrupted due to noise, distortion and low impedances generated by all kinds of electrical equipment and/or appliances being operated in buildings to which the electricity supply is connected.

EP 2009807 describes a power line communications system that overcomes the disadvantages mentioned above. In particular, a power line communications system is described that operates over a power distribution network. The power line communications system comprises a communications server that sends and receives messages over a telecommunications network, at least one gateway for transferring messages to and from the telecommunications network onto power lines of the power distribution network, and a smart metering device located in an end user network. The smart metering device includes a power line communications modem that is connected to the power distribution network for sending and receiving messages within a predetermined frequency band over the power distribution network.

Here, power line communications filters are used to block frequencies within a predetermined frequency band that is used for power line communication. The power line communications filters can be located in the smart metering devices or located externally to them and serve to isolate the metering device from both the power distribution network and the end user network on the power line communication frequencies used by the smart metering devices as well as separating the power distribution network from very low and varying impedances obtained on power transformer in power distribution sub-stations.

However, noise generated at the end user network inside buildings cannot be sufficiently suppressed by the system described in EP 2009807 described above.

It is therefore an object of the present invention to provide improved noise filtering for use with power line communications systems that can be used in addition to the filtering system for power distribution lines as described in EP 2009807.

It is another object of the present invention to provide a smart metering device that includes noise filtering that attenuates signals from an end user network to which the device is connected.

It is a further object of the present invention to provide a sub-station with additional noise filtering that suppresses noise generated by a sub-station transformer.

In accordance with one aspect of the present invention, there is provided a notch filter unit for suppressing noise in a power line communications system operating in a power line communications band on a power distribution network, the notch filter unit comprising:
a parallel resonant circuit, provided for connection in series with an active phase of the power distribution network and having first components forming a first notch filter element in the power line communications frequency band that has a low impedance at the mains frequency; and
at least one series resonant circuit, provided for connectiion between an active and a neutral phase or between two active phases of the power distribution network and having second components forming a second notch filter element in the power line communications frequency band that has a high impedance at the mains frequency.

The term "low impedance at the mains frequency" is used to mean that the parallel resonant circuit has an overall impedance value at the mains frequency that is low enough to pass the mains current substantially without attenuation.

The term "high impedance at the mains frequency" is used to mean that the series resonant circuit has an overall impedance value at the mains frequency that is high enough to prevent a short circuit through that series resonant circuit.

In one embodiment of the present invention, the notch filter unit comprises two or more of said series resonant circuits forming second notch filter elements in parallel. In this case, each series resonant circuit may be tuned to a different frequency. This has the advantage that a larger suppression bandwidth with higher attenuation can be obtained due of the two series resonant circuits arranged in parallel.

In accordance with another aspect of the present invention, there is provided a smart metering device for connection to an end user network, the smart metering device comprising: a power consumption measurement unit for measuring power consumption of the end user network; a power line communications modem operating in a power line communications frequency band; and at least one notch filter unit, as described above.

The addition of at least one notch filter unit to the smart metering device has the advantage that noise generated in the end user mains network by appliances and/or equipment can be suppressed by an extra 15 to 20dB when compared to the system described in EP 2009807 discussed above. The noise that is suppressed includes both random noise and impulse noise in the filtered bandwidth.

If the power distribution network comprises a single-phase distribution network, each notch filter unit may be connected such that the parallel resonant circuit is connected in series with the single-phase distribution line and each series resonant circuit is connected in parallel across the single-phase distribution line.

If the power distribution network comprises a three-phase distribution network, each notch filter unit may be connected between phases such that the parallel resonant circuit is connected in series with a low voltage line of the phase and each series resonant circuit is connected in parallel across the phase. If a neutral line is also provided in the three-phase power distribution network, the series resonant circuits are connected between one of the phases and the neutral line.

In accordance with a further aspect of the present invention, there is provided a distributor power line communication system comprising: a telecommunications network; a communications server connected to the telecommunications network for sending and receiving messages through the telecommunications network; a power distribution network; a power distribution sub-station connected to one end of the power distribution network, the power distribution sub-station including at least one transformer having a primary side and a secondary side with at least one notch filter unit as described above, connected across each secondary side of each transformer; at least one end user network connected to another end of the power distribution network; at least one gateway for transferring messages between the telecommunications network and the power distribution network using a predetermined frequency band associated with power line communication; and at least one smart metering device, as described above, connected to an end user network.

The use of the notch filter unit in the secondary side of a transformer in a power distribution sub-station provides attenuation of the noise coming from the primary side of the transformer.

In a distributor power line communication system as described above, the use of the notch filters in low voltage substations increases the isolation between power line communications gateways on different outlets of the sub-station so that mutual interference between gateways working on the same frequency is reduced further.

For a better understanding of the present invention, reference will now be made, by way of example only, to the accompanying drawings in which:-
Figure 1 illustrates a first embodiment of a distributor power line communications system in accordance with the present invention;
Figure 2 illustrates a second embodiment of a distributor power line communications system in accordance with the present invention;
Figure 3 illustrates a first embodiment of a notch filter unit in accordance with the present invention;
Figure 4 shows a graphic illustration of noise attenuation produced by the notch filter unit of Figure 3;
Figure 5 illustrates a second embodiment of a notch filter unit in accordance with the present invention; and
Figure 6 shows a graphic illustration of noise attenuation produced by the notch filter unit of Figure 5.

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

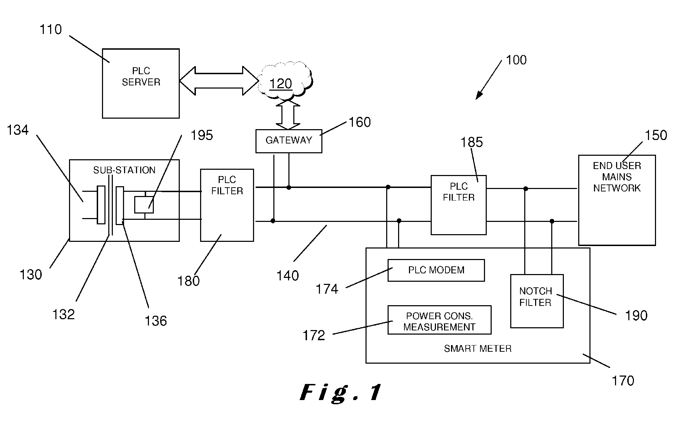

Referring initially to Figure 1, a first embodiment of a distributor power line communication (PLC) system 100 in which the present invention can be implemented is shown. The system 100 comprises a power line communication server 110 for sending and receiving messages over a telecommunication network 120; a power distribution sub-station 130 connected to a power distribution network 140; an end user mains network 150; and a smart metering device 170. The end user mains network 150 and the smart metering device 170 are both connected to the power distribution network 140. A gateway 160 transfers messages from the telecommunication network 120 onto the power lines of the power distribution network 140 and vice versa. Messages on the power lines are in a predetermined frequency band that is used for PLC.

The smart metering device 170 has a power consumption measurement device 172 for measuring the power consumption at the end user mains network 150. This device 170 comprises a PLC modem 174 connected to the power distribution network 140 for sending and receiving messages within the predetermined frequency band over the power distribution network 140.

Although a single end user mains network 150 is shown, it will readily be appreciated that a plurality of such end user mains networks are normally connected to the power distribution network 140. In this case, each end user mains network 150 will have an associated smart metering device 170.

The system of Figure 1 further comprises first notch filter elements, called "PLC filters" 180 and 185 on the power distribution network 140 that are located between the power distribution sub-station 130 and the gateway 160 and between the smart metering device 170 and the end user mains network 150 respectively. Each of these filters 180, 185 comprises filtering components for blocking frequencies within the predetermined frequency band, which is used for the PLC over the power distribution network 140.

The first filters 180, 185 of the system of Figure 1 are parallel resonant circuits, for example LC-networks, which are inserted between a low voltage connection of the power distribution sub-system 130 and the end user mains network 150 in such a way that a rejection frequency band covering the used frequency range of the PLC modem 174 is obtained. The frequencies most often used for PLC are in the Cenelec PLC frequency bands A (9 to 95kHz), reserved for utility use, and C+D (125 to 148.5kHz) for use inside buildings, but band B (95 to 125 kHz) may also be used by end users. Preferably, the centre of the rejection frequency band is at least two decades higher than the mains frequency for limiting the impact of the filters on the transmission of electrical power on the mains frequency. For example, for a mains frequency of 50Hz, the centre of the rejection frequency band is preferably higher than 5000Hz.

In accordance with one embodiment of the present invention, a second notch filter element, called "notch filter" 190 forms part of the smart metering device 170 and is located between the PLC filter 185 and the end user mains network 150. The notch filter unit 190 is connected across pairs of active phases and/or neutral line of the low-voltage connection on the side of the end user mains network 150.

The introduction of the second notch filter element 190 reduces noise generated by electrical appliances and equipment in the end user mains network 150. Both random noise, narrowband noise and impulse noise can be suppressed by an extra 15 to 20dB compared to what is obtained in the distributor power line communication system described in EP 2009807 discussed above.

In addition, the notch filter elements described above can also be used in low voltage sub-stations. Here, they are located in a secondary side 136 of a sub-station transformer 132 and are referred to hereinafter as sub-station PLC notch filters 195. This has the effect of attenuating the noise from the primary side 134 of the transformer 132 and increasing the isolation between PLC gateways 160 on different outlets of the sub-station 130 so that mutual interference between gateways 160 operating on the same frequency is reduced.

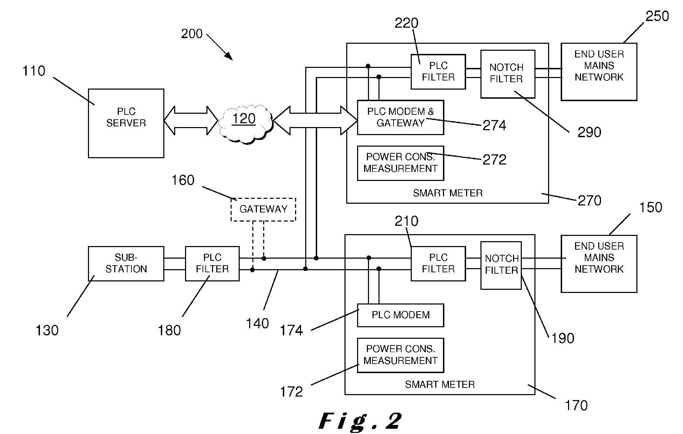

The filter 185 can be external as shown in Figure 1 (which may be preferred since the mains current passes through this filter), but may also be integrated into the smart metering devices 270 as shown in a system 200 shown in Figure 2. Here, the first filter elements, "PLC filters" 210, 220 as well as the second filter elements, "notch filters" 190, 290 are provided as part of respective smart metering devices 170, 270. The second filter elements 190, 290 are connected between active phases and/or neutral line of the low voltage connection on the end user mains network 150, 250. In Figure 2, components that have been described above with reference to Figure 1 are numbered the same.

In both cases, the signal of the PLC modem 174, 274 has to be injected upstream from the filter(s) 185, 210, 220 for the PLC over the power distribution network 140. PLC signals, which are to be further transmitted inside the end user mains network 150, mostly on another frequency and frequency band, are re-injected downstream from the filter(s) 185.

The system 200 shown in Figure 2 further differs from that of Figure 1 in that one (or more) of the smart metering devices 270 at a given end user mains network 250 has a PLC modem 274 which also functions as a gateway towards the telecommunications network 120. This does not preclude that the first gateway 160 of the system 100 of Figure 1 is present as well, but it can be omitted. The presence of multiple gateways 160, 274 provides the ability to transfer the gateway function from one to the other if necessary.

The first filters 180, 185 comprise one or more parallel resonant circuits, for example LC-networks, designed so as to limit the voltage drop caused by the inductance at mains frequency (50 or 60Hz). For example, if the value of the coils is lower than about 2mH this condition can be considered fulfilled up to 63A load current as the voltage drop is then limited to about 1% or 2.3V of the typical 230V mains voltage.

The filter 185 is designed to sustain the nominal load current of the connected end user mains network 150 (order of magnitude maximum 100A) without overheating and survive typical short circuit currents on low voltage networks. The filter 180 is designed to sustain the full load connected to the sub-station or the respective sub-station outlet at which the filter is provided (sub-stations may have multiple outlets), as well as to survive the typical short circuit currents on that point of the network.

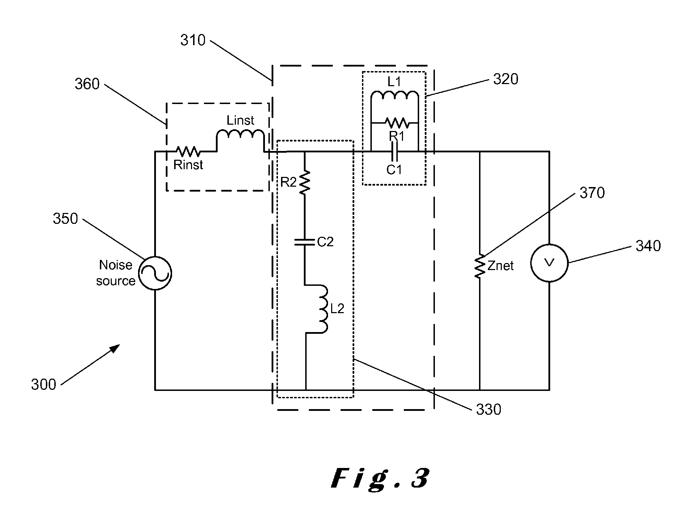

Figure 3 illustrates a first embodiment of a circuit 300 including a notch filter unit 310 in accordance with the present invention. The notch filter unit 310 comprises a parallel resonant circuit 320 in series and a series resonant circuit 330 in parallel. The series filter 320 comprises a resistor R1, an inductor L1, and a capacitor C1 connected in parallel. The parallel filter 330 comprises a resistor R2, an inductor L2, and a capacitor C2 connected in series. The circuit 300 comprises a voltmeter 340 and a noise source 350. As shown, the series filter element 320 is connected in series with the voltmeter 340 parallel to the network impedance and the noise source 350. The parallel filter element 330 is connected across the noise source 340 with its internal impedance Rinst plus Linst. Additionally, an impedance 360 comprising Rinst and Linst is shown in series with noise source 350 and network impedance 370 is connected across the voltmeter.

Typical values for R1, L1, C1, R2, L2, C2, Rinst, Linst and Znet are shown in Table 1 below.

**Table 1.**

| **Resistor** | **Ω** | **Inductor** | **µH** | **Capacitor** | **nF** |
|---|---|---|---|---|---|
| R1 | 100 | L1 | 50 | C1 | 110 |
| R2 | 4 | L2 | 50 | C2 | 110 |
| Rinst | 4 | Linst | 31 | | |
| Znet | 9.3 | | | | |

It will be appreciated that although particular values are given for R1, L1, C1, R2, L2, C2, Rinst, Linst and Znet in Table 1, other values may be implemented according to the particular application.

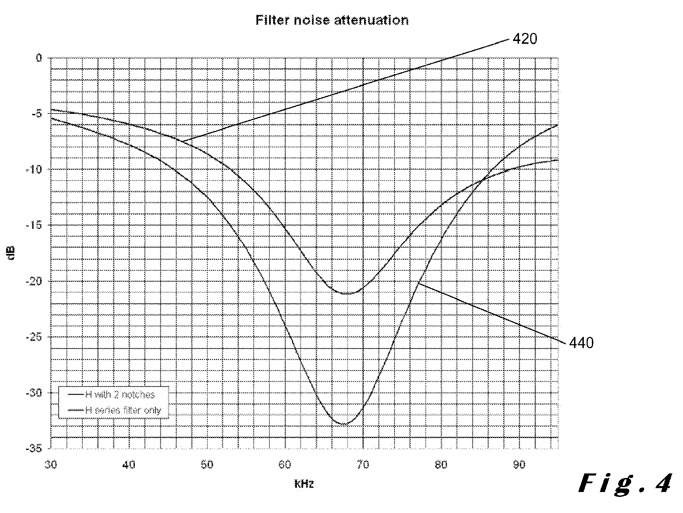

Filter noise attenuation results for a single parallel filter using the circuit of Figure 3 are shown in Table 2 below. Values for certain frequency values in a frequency range of between 30kHz and 95kHz are given. The results of Table 2 are shown graphically in Figure 4.

**Table 2.**

| | **H+notches - 440** | **H seriesfilter - 420** |
|---|---|---|
| **f (kHz)** | **H (dB)** | **H(dB)** |
| 30 | -5,435 | -4,609 |
| 31 | -5,627 | -4,714 |
| 32 | -5,826 | -4,823 |
| 33 | -6,032 | -4,939 |
| 34 | -6,247 | -5,060 |
| 35 | -6,472 | -5,187 |
| 36 | -6,708 | -5,322 |
| 37 | -6,956 | -5,464 |
| 38 | -7,219 | -5,614 |
| 39 | -7,498 | -5,774 |
| 40 | -7,795 | -5,944 |
| 41 | -8,113 | -6,126 |
| 42 | -8,454 | -6,321 |
| 43 | -8,823 | -6,530 |
| 44 | -9,221 | -6,756 |
| 45 | -9,655 | -7,000 |
| 46 | -10,128 | -7,265 |
| 47 | -10,645 | -7,554 |
| 48 | -11,212 | -7,869 |
| 49 | -11,834 | -8,215 |
| 50 | -12,519 | -8,595 |
| 51 | -13,272 | -9,014 |
| 52 | -14,099 | -9,477 |
| 53 | -15,008 | -9,987 |
| 54 | -16,004 | -10,552 |
| 55 | -17,092 | -11,176 |
| 56 | -18,275 | -11,863 |
| 57 | -19,556 | -12,617 |
| 58 | -20,933 | -13,440 |
| 59 | -22,400 | -14,330 |
| 60 | -23,944 | -15,280 |
| 61 | -25,541 | -16,276 |
| 62 | -27,156 | -17,295 |
| 63 | -28,731 | -18,301 |
| 64 | -30,189 | -19,246 |
| 65 | -31,429 | -20,068 |
| 66 | -32,339 | -20,701 |
| 67 | -32,818 | -21,088 |
| 68 | -32,803 | -21,194 |
| 69 | -32,292 | -21,017 |
| 70 | -31,346 | -20,591 |
| 71 | -30,064 | -19,972 |
| 72 | -28,557 | -19,222 |
| 73 | -26,927 | -18,401 |
| 74 | -25,251 | -17,555 |
| 75 | -23,584 | -16,718 |
| 76 | -21,965 | -15,913 |
| 77 | -20,416 | -15,154 |
| 78 | -18,951 | -14,450 |
| 79 | -17,576 | -13,802 |
| 80 | -16,293 | -13,211 |
| 81 | -15,101 | -12,676 |
| 82 | -13,999 | -12,193 |
| 83 | -12,983 | -11,759 |
| 84 | -12,049 | -11,371 |
| 85 | -11,194 | -11,024 |
| 86 | -10,413 | -10,715 |
| 87 | -9,701 | -10,439 |
| 88 | -9,055 | -10,195 |
| 89 | -8,470 | -9,979 |
| 90 | -7,942 | -9,788 |
| 91 | -7,467 | -9,619 |
| 92 | -7,041 | -9,470 |
| 93 | -6,660 | -9,340 |
| 94 | -6,322 | -9,226 |
| 95 | -6,022 | -9,126 |

In Figure 4, filter noise attenuation for a notch filter unit 310 according to figure 3 is shown. The upper trace 420 relates to the first filter element 320 alone and the lower trace 440 relates to the first filter element 320 together with the single second filter element 330.

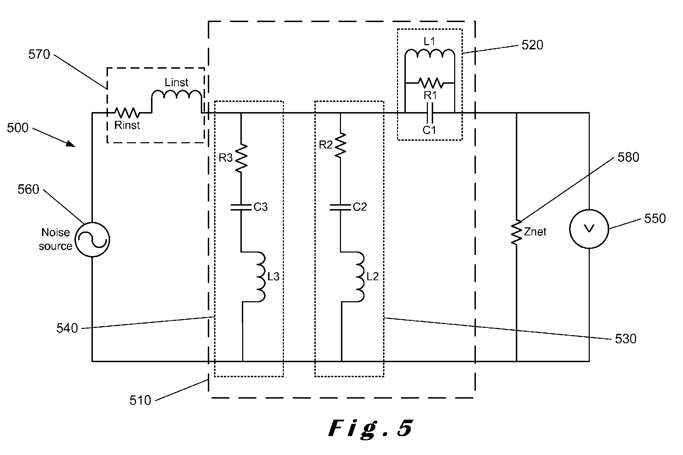

Figure 5 illustrates a second embodiment of a circuit 500 that includes a notch filter unit 510 in accordance with the present invention. The notch filter unit 510 comprises a parallel resonant circuit 520 in series and two series resonant circuits 530, 540 in parellel. The parallel resonant circuit 520 comprises a resistor R1, an inductor L1, and a capacitor C1 connected in parallel in a similar way to that described for the first filter element 320 of Figure 3. A first series resonant circuit 530 comprises a resistor R2, an inductor L2, and a capacitor C2 connected in series in a similar way to that described for the second filter element 330 of Figure 3. A second series resonant circuit 540 comprises a resistor R3, an inductor L3, and a capacitor C3 also connected in series in a similar way to that described for the second filter element 330 of Figure 3. The circuit 500 comprises a voltage source 550 and a noise source 560 that are similar to the voltage source 340 and the noise source 350 of Figure 3. As shown, the first filter element 520 is connected in series with the voltage source 550 and the noise source 560, and the second filter elements 530, 540 are connected in parallel across the voltage source 550 and the noise source 560. Additionally, an instantaneous impedance 570 comprising Rinst and Linst and network impedance 580 are shown in series with and connected across respectively the voltage source 550 and the noise source 560.

Typical values for R1, L1, C1, R2, L2, C2, R3, L3, C3, Rinst, Linst and Znet are shown in Table 3 below.

**Table 3.**

| **Resistor** | **Ω** | **Inductor** | **µH** | **Capacitor** | **nF** |
|---|---|---|---|---|---|
| R1 | 100 | L1 | 50 | C1 | 110 |
| R2 | 4.3 | L2 | 50 | C2 | 82 |
| R3 | 2.7 | L3 | 50 | C3 | 150 |
| Rinst | 4 | Linst | 31 | | |
| Znet | 9.3 | | | | |

It will be appreciated that although particular values are given for R1, L1, C1, R2, L2, C2, R3, L3, C3, Rinst, Linst and Znet in Table 3, other values may be implemented according to the particular application.

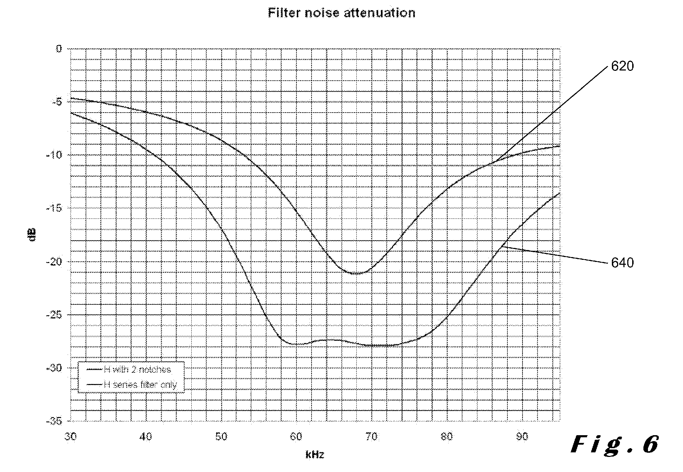

Filter noise attenuation results for a dual second filter element using the circuit of Figure 5 are shown in Table 4 below. Values for certain frequency values in a frequency range of between 30kHz and 95kHz are given. The results of Table 4 are shown graphically in Figure 6.

**Table 4.**

| | **H+NOTCHES - 640** | **H SERIESFILTER - 620** |
|---|---|---|
| **F (KHz)** | **H (DB)** | **H(DB)** |
| 30 | -6,036 | -4,609 |
| 31 | -6,293 | -4,714 |
| 32 | -6,564 | -4,823 |
| 33 | -6,850 | -4,939 |
| 34 | -7,153 | -5,060 |
| 35 | -7,474 | -5,187 |
| 36 | -7,817 | -5,322 |
| 37 | -8,183 | -5,464 |
| 38 | -8,575 | -5,614 |
| 39 | -8,998 | -5,774 |
| 40 | -9,453 | -5,944 |
| 41 | -9,946 | -6,126 |
| 42 | -10,481 | -6,321 |
| 43 | -11,062 | -6,530 |
| 44 | -11,696 | -6,756 |
| 45 | -12,387 | -7,000 |
| 46 | -13,143 | -7,265 |
| 47 | -13,971 | -7,554 |
| 48 | -14,878 | -7,869 |
| 49 | -15,871 | -8,215 |
| 50 | -16,958 | -8,595 |
| 51 | -18,144 | -9,014 |
| 52 | -19,432 | -9,477 |
| 53 | -20,815 | -9,987 |
| 54 | -22,274 | -10,552 |
| 55 | -23,757 | -11,176 |
| 56 | -25,174 | -11,863 |
| 57 | -26,386 | -12,617 |
| 58 | -27,251 | -13,440 |
| 59 | -27,708 | -14,330 |
| 60 | -27,824 | -15,280 |
| 61 | -27,742 | -16,276 |
| 62 | -27,590 | -17,295 |
| 63 | -27,455 | -18,301 |
| 64 | -27,378 | -19,246 |
| 65 | -27,376 | -20,068 |
| 66 | -27,444 | -20,701 |
| 67 | -27,565 | -21,088 |
| 68 | -27,706 | -21,194 |
| 69 | -27,828 | -21,017 |
| 70 | -27,905 | -20,591 |
| 71 | -27,927 | -19,972 |
| 72 | -27,898 | -19,222 |
| 73 | -27,827 | -18,401 |
| 74 | -27,716 | -17,555 |
| 75 | -27,555 | -16,718 |
| 76 | -27,325 | -15,913 |
| 77 | -26,996 | -15,154 |
| 78 | -26,541 | -14,450 |
| 79 | -25,946 | -13,802 |
| 80 | -25,216 | -13,211 |
| 81 | -24,375 | -12,676 |
| 82 | -23,460 | -12,193 |
| 83 | -22,505 | -11,759 |
| 84 | -21,542 | -11,371 |
| 85 | -20,596 | -11,024 |
| 86 | -19,682 | -10,715 |
| 87 | -18,810 | -10,439 |
| 88 | -17,984 | -10,195 |
| 89 | -17,209 | -9,979 |
| 90 | -16,482 | -9,788 |
| 91 | -15,805 | -9,619 |
| 92 | -15,174 | -9,470 |
| 93 | -14,588 | -9,340 |
| 94 | -14,044 | -9,226 |
| 95 | -13,540 | -9,126 |

In Figure 6, filter noise attenuation for a notch filter unit 510 according to Figure 5 is shown. The upper trace 620 relates to the first filter element 520 alone and the lower trace 640 relates to the first filter element 520 together with the dual parallel second filter elements 520, 530.

In the embodiment of Figure 5, a larger suppression bandwidth with high attenuation is obtained due to having two series resonant circuits arranged in parallel. It is to be noted, from values given in Table 4, that the each of the series resonant circuits is tuned to a different frequency.

Whilst the notch filter unit of the present invention has been described with reference to one or two series resonant circuits, it will be appreciated that a plurality of series resonant circuits can be provided, each tuned to a different frequency.

Although not shown, each series resonant filter element may include some circuit breaker for safety reasons. Alternatively the parallel filter element(s) can be installed in substations downstream from existing protected outlets, like the ones used for public lighting. In the described embodiments, the notch filter unit of the present invention has been shown as being connected to a single phase of an electricity supply.

It will be appreciated that a notch filter unit is preferably provided in each phase of an electricity supply and is connected between active phases in the case of a three-phase supply with no neutral line or between active phases and/or neutral where a neutral line is provided.

It should be noted that care should be taken to prevent damage to capacitors in the notch filter unit due to over voltages. Self-healing capacitors certified for mains use can be used. Over-current protection can also be provided to interrupt short circuit currents in the case of a failing capacitor. Ideally, the over-current protection device should be a self-repairing device to prevent the series resonant filter becoming inoperative after a voltage surge that causes a fuse to trip.

Increased noise suppression may be obtained on the central frequency where lower resistor values are used. Another trade-off between bandwidth and noise suppression may be to detune the series PLC filter and the notch filter unit. This detuning may result in a larger rejection bandwidth compared to the situation with series and parallel filter elements tuned to the same frequency, but at the cost of a lower noise suppression.

## Claims

1. A notch filter unit (310; 510) for suppressing noise in a power line communications system (100; 200) operating in a power line communications band on a power distribution network (140), the notch filter unit (310; 510) comprising:
a parallel resonant circuit (185; 210; 220; 320; 520), provided for connection in series with an active phase of the power distribution network (140) and having first components (R1, L1, C1) forming a first notch filter element in the power line communications frequency band that has a low impedance at the mains frequency; and
at least one series resonant circuit (190; 290; 330; 530, 540), provided for connection between an active and a neutral phase or between two active phases of the power distribution network (140) and having second components (R2, L2, C2; R3, L3, C3) forming a second notch filter element in the power line communications frequency band that has a high impedance at the mains frequency.

2. A notch filter unit according to claim 1, comprising two or more of said series resonant circuits (530, 540) forming second notch filter elements in parallel.

3. A notch filter unit according to claim 2, wherein said two or more series resonant circuits (530, 540) are each tuned to a different frequency.

4. A smart metering device (170; 270) for connection to an end user network (150; 250), the smart metering device (170; 270) comprising:
a power consumption measurement unit (172; 272) for measuring power consumption at the end user network (150; 250);
a power line communications modem (174; 274) operating in a power line communications frequency band; and
at least one notch filter unit (310; 510), according to any one of the preceding claims.

5. A smart metering device according to claim 4, wherein the power distribution network (140) comprises a single-phase distribution network and each notch filter unit (310; 510) is connected such that the parallel resonant circuit (320; 520) is connected in series with the single-phase distribution line and each series resonant circuit (330; 530, 540) is connected in parallel across the single-phase distribution line.

6. A smart metering device according to claim 4, wherein the power distribution network (140) comprises a three-phase distribution network and each notch filter unit (310; 510) is connected such that the parallel resonant circuit is connected in series with a low voltage line of one of the phases of the network and each series resonant circuit is connected in parallel across this phase.

7. A smart metering device according to claim 6, wherein the power distribution network (140) further comprises a neutral line, each series resonant circuit (330; 530, 540) being connected between one of the phases and the neutral line.

8. A distributor power line communication system (100; 200) comprising:
a telecommunications network (120);
a communications server (110) connected to the telecommunications network (120) for sending and receiving messages through the telecommunications network (120);
a power distribution network (140);
a power distribution sub-station (130) connected to one end of the power distribution network (140), the power distribution sub-station (130) including at least one transformer (132) having a primary side (134) and a secondary side (136) with at least one notch filter unit (180, 195) according to any one of claims 1 to 3, connected across each secondary side (136) of each transformer (132);
at least one end user network (150; 250) connected to another end of the power distribution network (140);
at least one gateway (160; 274) for transferring messages between the telecommunications network (120) and the power distribution network (140) using a predetermined frequency band associated with power line communication;
at least one smart metering device (170; 270), according to any one of claims 4 to 7, connected to an end user network (150; 250).
